# EUROPEAN PATENT APPLICATION

(11) **EP 4 752 067 A1**
(43) Date of publication of application: **03.06.2026**
(21) Application number: 25219137.4
(22) Date of filing: 27.11.2025
(51) Int. Cl.: B64D 35/08, B64D 35/025, B64D 27/33, B64D 27/10

(54) **AIRCRAFT HYBRID ELECTRIC PROPULSION SYSTEM WITH MULTIPLE PERFORMANCE PACKAGES**

(30) Priority: 27.11.2024 US 202418962753
(71) Applicant: Pratt & Whitney Canada Corp., (01BE5) Longueuil, QC J4G 1A1 (CA)
(72) Inventor: BERTRAND, Pierre, (01BE5) Longueuil, J4G 1A1 (CA); CHATELOIS, Bruno, (01BE5) Longueuil, J4G 1A1 (CA); COUTURE-GAGNON, Vincent, (01BE5) Longueuil, J4G 1A1 (CA); DUROCHER, Eric, (01BE5) Longueuil, J4G 1A1 (CA); FREER, Richard, (01BE5) Longueuil, J4G 1A1 (CA); LABRECQUE, Michel, (01BE5) Longueuil, J4G 1A1 (CA); WEAVER, Paul, (01BE5) Longueuil, J4G 1A1 (CA)
(74) Representative: Dehns

(57) **Abstract**

A hybrid-electric propulsion system (26) for an aircraft (20) is provided that includes a propulsion unit (32), a propulsion unit gear box (30), a gas turbine engine (28), and an electric motor drive system (34). The gas turbine engine (28) has compressor, combustion, and turbine sections, and is configured to provide motive force to the propulsion unit gear box (30). The electric motor drive system (34) is disposed to provide motive force to the propulsion gear box (30) or to the gas turbine engine (28). The electric motor drive system (EMDS) (34) is adapted to interchangeably use a plurality of EMDS packages, each EMDS package including an electric motor (36) and a battery (38). The electric motor drive system (34) has a set of performance parameters that vary depending upon the particular EMDS package that is used with the electric motor drive system (34). The electric motor drive system (34) includes interfaces that allow each EMDS package to be interchangeably used.

## Description

### BACKGROUND OF THE DISCLOSURE

### 1. Technical Field

This disclosure relates generally to propulsion systems for aircraft in general and to hybrid-electric propulsion systems for aircraft in particular.

### 2. Background Information

Flying with one engine not producing significant power is known as one engine inoperative (OEI) operation. On a twin propeller aircraft, the maximum altitude that can be maintained following failure of an engine is usually lower than the maximum altitude that can be maintained with two engines functioning. Propulsion systems that have more power available in OEI conditions could increase OEI cruise altitude (Single Engine Ceiling) and permit aircraft to fly more direct, fuel efficient routes over tall mountains.

Having additional power for a limited time at high altitude to enable one engine inoperative cruise (either level cruise or to cruise with a reduced descent rate) could enable more efficient route planning and less fuel burn during normal operation. Not all operators need to fly over mountains however and for them, having this additional power capability might be undesirable since propulsion system weight and cost often increases with power. Therefore propulsion systems that can be reconfigured to adapt to different needs can be advantageous.

### SUMMARY OF THE DISCLOSURE

According to an aspect of the present disclosure, a hybrid-electric propulsion (HEP) system for an aircraft is provided that includes a propulsion unit, a propulsion unit gear box, a gas turbine engine, and an electric motor drive system. The propulsion unit gear box is engaged with the propulsion unit. The gas turbine engine is engaged with the propulsion unit gear box. The gas turbine engine has compressor, combustion, and turbine sections, and is configured to provide motive force to the propulsion unit gear box. The electric motor drive system is disposed to provide motive force to the propulsion gear box or to the gas turbine engine. The electric motor drive system (EMDS) is adapted to interchangeably use a plurality of EMDS packages, and each EMDS package includes an electric motor and a battery configured to provide electrical energy to the electric motor. The electric motor is mounted to a motor mounting structure within the HEP system. The electric motor drive system has a set of performance parameters that varies depending upon the particular EMDS package that is used with the electric motor drive system. The electric motor drive system includes a plurality of interfaces that allow each EMDS package to be interchangeably used with the electric motor drive system.

In any of the aspects or embodiments described above and herein, the plurality of EMDS packages may include a first EMDS package that has a first electric motor with a first power rating and a second EMDS package that has a second electric motor with a second power rating, wherein the second power rating may be greater than the first power rating, and the first power rating and the second power rating each may each be a performance parameter within the set of performance parameters.

In any of the aspects or embodiments described above and herein, the motor mounting structure may be configured to mount the first electric motor or the second electric motor.

In any of the aspects or embodiments described above and herein, the motor mounting structure may be configured to mount the first electric motor or the second electric motor to provide motive force to the gas turbine engine or to the propulsion unit gear box.

In any of the aspects or embodiments described above and herein, the first EMDS package may include a first battery having a first power storage capacity, and the second EMDS package may include a second battery having a second power storage capacity, and the second power storage capacity may be greater than the first power storage capacity, and the first power storage capacity and the second power storage capacity each may be a performance parameter within the set of performance parameters.

In any of the aspects or embodiments described above and herein, the first battery may have a first set of thermal environment requirements and the second battery may have a second set of thermal environment requirements, and the first EMDS package may include a first battery thermal management system that is configured to satisfy the first set of thermal environment requirements, and the second EMDS package may include a second battery thermal management system that is configured to satisfy the second set of thermal environment requirements, and the HEP system may be configured such that the first battery thermal management system is interchangeable with the second battery thermal management system.

In any of the aspects or embodiments described above and herein, the first set of thermal environment requirements may be different than the second set of thermal environment requirements, and the first battery thermal management system may be configured differently than the second battery thermal management system.

In any of the aspects or embodiments described above and herein, the first EMDS package may include a first battery electrical management system configured for use with the first battery and the second EMDS package may include a second battery electrical management system configured for use with the second battery, and the first battery electrical management system may be configured differently than the second battery electrical management system, and the HEP system may be configured such that the first battery electrical management system is interchangeable with the second battery electrical management system.

In any of the aspects or embodiments described above and herein, the first electric motor may have a first set of cooling requirements and the second electric motor may have a second set of cooling requirements, and the first EMDS package may include a first E-Motor cooling system configured to satisfy the first set of cooling requirements, and the second EMDS package may include a second E-Motor cooling system configured to satisfy the second set of cooling requirements, and the HEP system may be configured such that the first E-Motor cooling system is interchangeable with the second E-Motor cooling system, and the first set cooling requirements may be different than the second set of cooling requirements, and the first E-Motor cooling system may be configured differently than the second E-Motor cooling system.

In any of the aspects or embodiments described above and herein, the first EMDS package may include a first electric motor controller configured for use with the first electric motor and the second EMDS package may include a second electric motor controller configured for use with the second electric motor, and the first electric motor controller may be configured differently than the second electric motor controller, and the HEP system may be configured such that the first electric motor controller is interchangeable with the second electric motor controller.

According to an aspect of the present disclosure, an aircraft is provided that includes a fuselage and a hybrid-electric propulsion (HEP) system. The HEP system includes a propulsion unit, a propulsion unit gear box, a gas turbine engine, and an electric motor drive system. The propulsion unit gear box is engaged with the propulsion unit. The gas turbine engine is engaged with the propulsion unit gear box. The gas turbine engine has a compressor section, a combustion section, and a turbine section. The gas turbine engine is configured to provide motive force to the propulsion unit gear box. The electric motor drive system is disposed to provide motive force to the propulsion gear box or to the gas turbine engine. The electric motor drive system (EMDS) is adapted to interchangeably use a plurality of EMDS packages. Each EMDS package includes an electric motor and a battery configured to provide electrical energy to the electric motor. The electric motor is mounted to a motor mounting structure within the HEP system. The electric motor drive system has a set of performance parameters that varies depending upon the particular EMDS package that is used with the electric motor drive system. The electric motor drive system includes a plurality of interfaces that allow each EMDS package to be interchangeably used with the electric motor drive system.

In any of the aspects or embodiments described above and herein, the plurality of EMDS packages may include a first EMDS package and a second EMDS package, and the first EMDS package may include a first electric motor mounted to provide motive force to the gas turbine engine by a first mounting structure, and the second EMDS package may include a second electric motor mounted to provide motive force to the gas turbine engine by the first mounting structure, and may include a third electric motor mounted to provide motive force to the propulsion unit gear box by a second mounting structure.

In any of the aspects or embodiments described above and herein, the first battery may have a first number of battery strings, and the second battery may have a second number of battery strings, and the second number of battery strings may be greater than the first number of battery strings.

According to an aspect of the present disclosure, a method of equipping an aircraft with a hybrid-electric propulsion system is provided. The method including: providing a hybrid-electric propulsion (HEP) system for an aircraft, that includes: a propulsion unit, a propulsion unit gear box engaged with the propulsion unit, a gas turbine engine engaged with the propulsion unit gear box, the gas turbine engine having compressor, combustion, and turbine sections, wherein the gas turbine engine is configured to provide motive force to the propulsion unit gear box, and an electric motor drive system disposed to provide motive force to the propulsion gear box or to the gas turbine engine. The electric motor drive system (EMDS) is adapted to interchangeably use a plurality of EMDS packages, and each EMDS package includes an electric motor and a battery configured to provide electrical energy to the electric motor, wherein the electric motor is mounted to a motor mounting structure within the HEP system, and wherein the electric motor drive system includes a plurality of interfaces that allow each EMDS package to be interchangeably used with the electric motor drive system. The method further including: determining a set of performance parameters for the electric motor drive system based on aircraft operational requirements; and selecting a particular EMDS package based on the set of performance parameters for the electric motor drive system.

In any of the aspects or embodiments described above and herein, the aircraft operational requirements may include a one engine inoperative requirement.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an aircraft.
FIG. 2 is a diagrammatic illustration of a present disclosure hybrid electric propulsion system embodiment.
FIG. 3 is a diagrammatic illustration of a present disclosure hybrid electric propulsion system embodiment.
FIG. 4 is a diagrammatic illustration of a present disclosure hybrid electric propulsion system embodiment.
FIG. 5 is a diagrammatic illustration of a gas turbine engine embodiment that may be used with the present disclosure.
FIG. 6 is a diagrammatic illustration of a present disclosure hybrid electric propulsion system embodiment.
FIG. 7 is a diagrammatic illustration of a present disclosure hybrid electric propulsion system embodiment.
FIG. 8 is a diagrammatic top view of a present disclosure HEP system with an E-Motor engaged with the gas turbine engine.
FIG. 9 is a diagrammatic side view of a present disclosure HEP system with an E-Motor engaged with the gas turbine engine.

### DETAILED DESCRIPTION

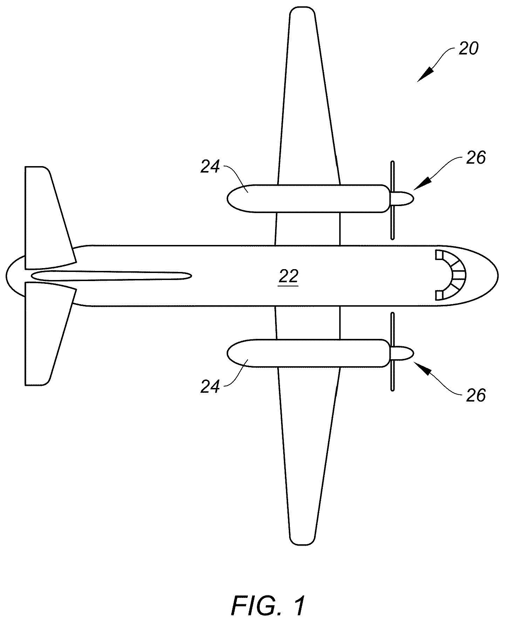

FIG. 1 illustrates a conventional fixed wing aircraft 20 that may utilize embodiments of the present disclosure. The aircraft includes a fuselage 22 and a pair of nacelles 24. Each nacelle 24 houses a propulsion system that provides thrust for the aircraft 20.

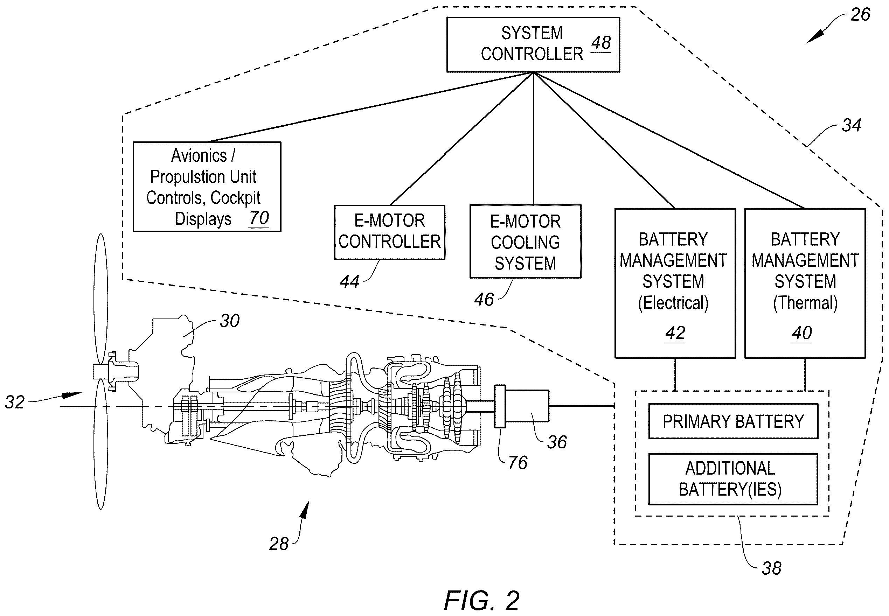

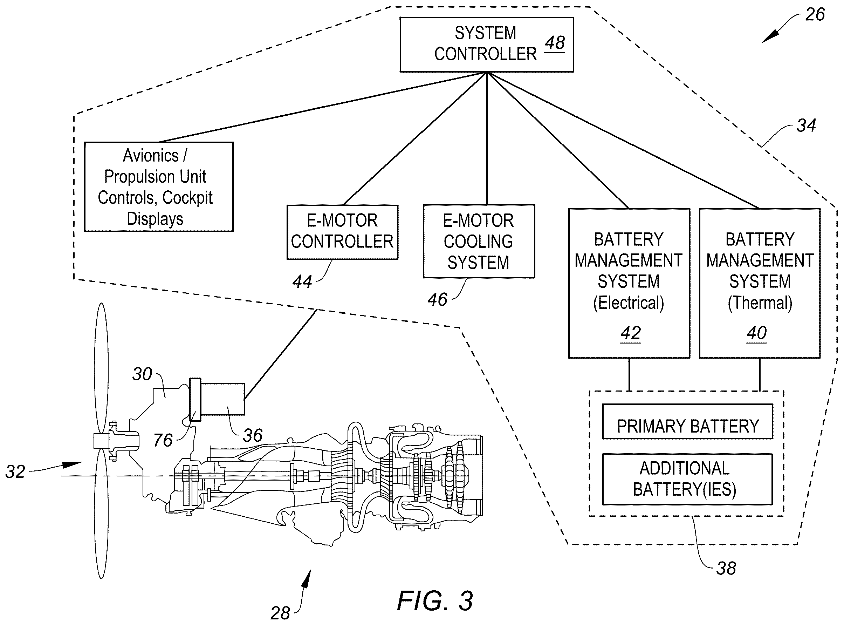

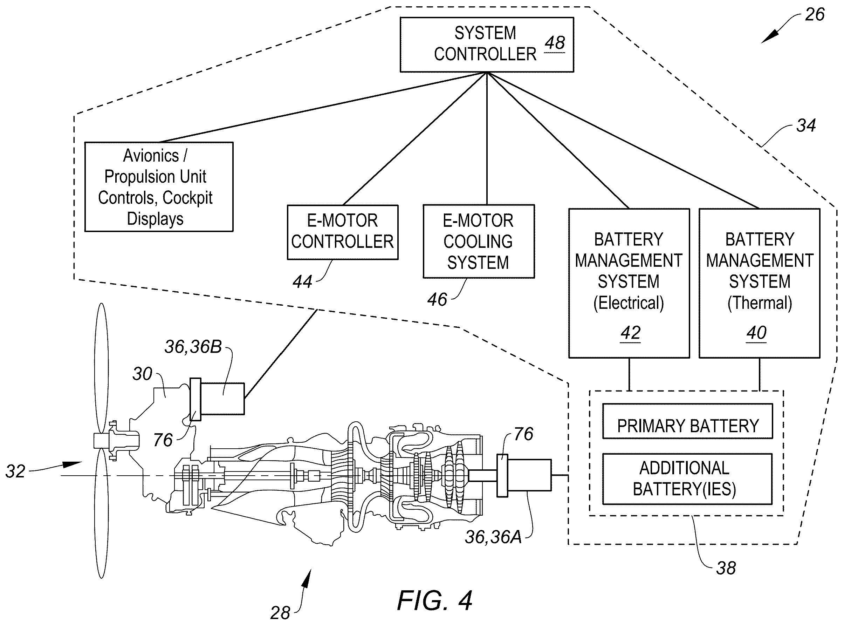

FIGS. 2-4 diagrammatically illustrate hybrid-electric propulsion (HEP) system 26 embodiments. Both HEP system 26 embodiments include a thermal engine (e.g., gas turbine engine 28), a reduction gear box 30, a propulsion unit 32, and an electric motor drive system 34. The electric motor drive system 34 (EMDS) may include an electric motor ("E-Motor 36"), an electrical energy storage device shown as a battery 38, a battery thermal management system 40, a battery electrical management system 42, an E-Motor controller 44, an E-motor cooling system 46, and a system controller 48. In some embodiments, portions of the avionics / propulsion unit controls 70 may be considered part of the electric motor drive system 34. The aforesaid components listed as part of the electric motor drive system 34 are examples of components that may be included and the present disclosure is not limited to this specific list; e.g., fewer or more components may be included and/or different components may be included. The HEP system 26 embodiment diagrammatically shown in FIG. 2 has an E-Motor 36 disposed to provide rotational drive to the gas turbine engine 28. The HEP system 26 embodiment diagrammatically shown in FIG. 3 has a gas turbine engine 28 and an E-Motor 36, each individually in drive communication with a gear box 30, and the gear box 30 is in drive communication with the propulsion unit 32. The HEP system 26 embodiment diagrammatically shown in FIG. 4 has a first E-Motor 36A disposed to provide rotational drive to the gas turbine engine 28 and a second E-Motor 36B in drive communication with the gear box 30 that is in drive communication with the propulsion unit 32.

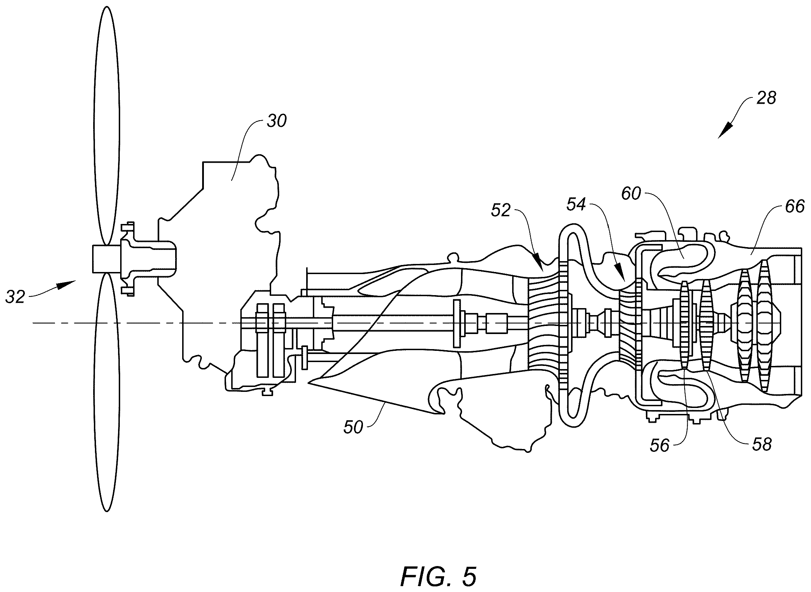

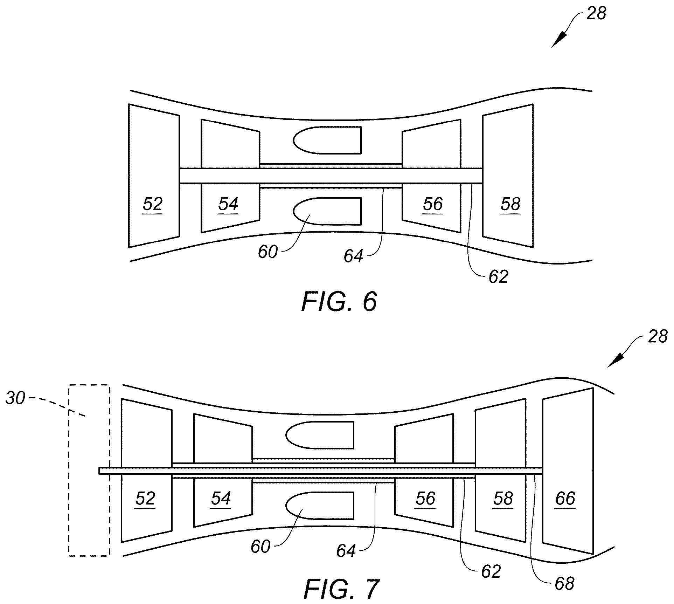

The HEP propulsion systems diagrammatically shown in FIGS. 2-4 include a thermal engine in the form of a gas turbine engine 28. FIG. 5 illustrates the gas turbine engine 28, reduction gear box 30 (RGB), and propulsion unit 32 separately from the HEP system 26 to facilitate the description herein. The gas turbine engine 28 includes an inlet duct 50, a low pressure compressor 52, a high pressure compressor 54, a high pressure turbine 56, a low pressure turbine 58, and a combustor 60. The low pressure turbine 58 is connected to low pressure compressor 52 by a low pressure shaft 62 and the high pressure turbine 56 is connected to high pressure compressor 54 by a high pressure shaft 64; e.g., see FIG. 6. In some instances (as shown in FIG. 5), the gas turbine engine 28 may include a power turbine 66. The power turbine 66 may be connected to a power turbine shaft 68 that extends axially through the engine 28 and may be used to drive the gear box 30; e.g., see FIG. 7. The gas turbine engine 28 shown in FIGS. 2-5 is a nonlimiting example of a gas turbine engine 28 that may be used with the present disclosure. The gas turbine engine 28 is in drive communication with the gear box 30. The gear box 30 is engaged with and in drive communication with the propulsion unit 32. The propulsion unit 32 is diagrammatically shown having propellers. The present disclosure is not limited to a propeller type propulsion unit 32.

The terms "forward", "leading", "aft, "trailing" are used herein to indicate the relative position of a component or surface. As core gas air passes through the engine, a "leading edge" of a stator vane or rotor blade encounters core gas air before the "trailing edge" of the same. In a gas turbine engine 28 like that shown in FIG. 5, the compressor section 52, 54 is "forward" of the turbine section 56, 58 and the turbine section 56, 58 is "aft" of the compressor section 52, 54. The terms "upstream" and "downstream" used herein refer to the direction of a gas flow passing through an annular gas path of the gas turbine engine 28. It should also be noted that the terms "radial" and "circumferential" are used herein with respect to the rotational axis of the gas turbine engine 28.

Referring back to FIGS. 2-4, the E-Motor 36 may be an alternating current (AC) motor configured to rotationally drive a component. The E-Motor 36 typically has a maximum continuous power rating (e.g., torque as a function of rotor speed) and may be rated to provide such power at predetermined E-Motor 36 operating temperature.

The E-Motor cooling system 46 may be configured to employ a coolant that removes thermal energy from the E-Motor 36 and E-Motor components. The coolant may be a fluid that is cycled through a heat exchanger that transfers thermal energy from the E-Motor 36 and E-Motor components to ambient air that is subsequently exhausted via an exhaust, or may be a flow of ambient air that is in communication with the E-Motor 36 and E-Motor components, and is subsequently exhausted via an exhaust, or the like, or any combination thereof. In those embodiments wherein an E-Motor 36 and E-Motor components (e.g., a gear box) utilize a lubricating system, the lubricating system may also function as a cooling system where, for example, the lubricant is passed through a heat exchanger, and the thermal energy is removed from the lubricant (and therefore from the E-Motor 36) and exhausted via an exhaust.

The battery 38 is an example of an electrical energy storage device that may be used with the present disclosure. The term "battery" is used herein to refer to a device that generates electrical energy from chemical reactions and can be operated in a discharging mode (i.e., a mode wherein electrical energy is produced) and in a charging mode (i.e., a mode wherein electrical energy is stored). The battery 38 has a power storage capacity; i.e., the amount of electrical energy that the battery 38 can store and discharge. The present disclosure is not limited to any particular battery 38 form. An example of a battery 38 that may be used is a battery string that includes a plurality of battery modules connected to one another in a series arrangement. Each battery module is the structure within which the chemical reaction occurs that produces electrical energy or that can be "charged" by receiving and storing electrical energy. As will be detailed herein, some present disclosure embodiments may include a single battery string and other embodiments may include more than one battery string.

The battery thermal management system 40 is configured to maintain the battery 38 and associated components at an acceptable thermal level. The system 40 may include cooling components that are controlled to provide a flow of cool air (e.g., ambient air) in contact with the batteries and meter the cooling air flow to achieve a desired heat transfer from the batteries during the charging or discharging modes.

The battery electrical management system 42 may include hardware, controls, and/or a controller and the like for controlling operation of the battery system; e.g., for controlling charging and/or discharging, for voltage balancing a plurality of battery strings, and the like. The battery electrical management system 42 may be configured to determine and provide status information such as a state of charge (e.g., power storage capacity remaining) or health of the battery system, to monitor battery voltage and/or current levels, to detect faults, and other appropriate operational parameters.

The E-Motor controller 44 may include hardware, controls, and/or a controller and the like for controlling operation of the E-Motor 36. For example, the E-Motor controller 44 may include an inverter used to control the speed of the E-Motor 36 by controlling voltage and frequency.

The avionics / propulsion unit controls 70 may include cockpit hardware (e.g., E-motor operational controls, operational parameter data displays, and the like) for controlling operation of the HEP system 26.

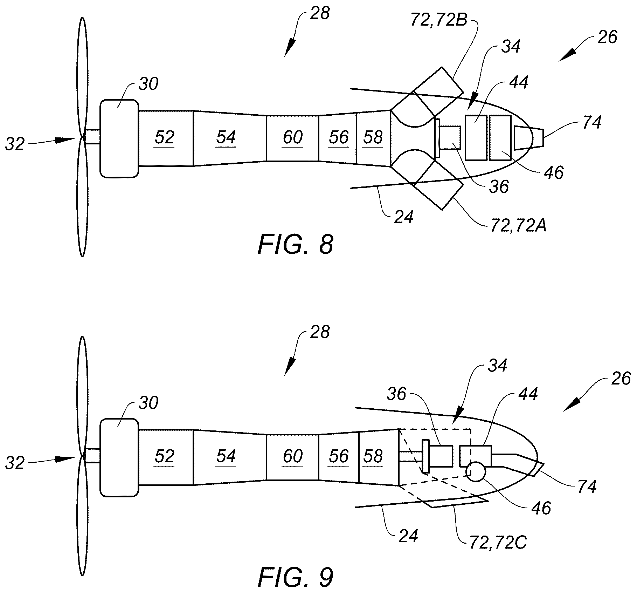

In some embodiments, present disclosure HEP system 26 EDMS packages (described herein) may include different thermal engine exhaust components 72 to accommodate EMDS package hardware within the aircraft nacelle 24. FIG. 8 is a diagrammatic top view of a present disclosure HEP system 26 with an E-Motor 36 engaged with the gas turbine engine 28. In this embodiment, the exhaust component 72 is configured as a split exhaust conduit arrangement that receives the exhaust gas flow from the gas turbine engine 28. A first portion of the exhaust gas flow is diverted to exit the HEP system 26 through a first exhaust conduit 72A disposed on a first side of the nacelle 24 and a second portion of the exhaust gas flow is diverted to exit the HEP system 26 through a second exhaust conduit 72B disposed on a second side of the nacelle 24, opposite the first side. The E-Motor 36, an E-Motor controller 44, an E-Motor cooling system 46, and other components may be disposed centrally relative to the split exhaust. This embodiment may include a cooling air exhaust conduit 74 extending out from the nacelle 24. FIG. 9 is a diagrammatic side view of a present disclosure HEP system 26 with an E-Motor 36 engaged with the gas turbine engine 28. In this embodiment, the exhaust component is a downward oriented exhaust conduit 72C that receives the exhaust gas flow from the gas turbine engine 28. The E-Motor 36 and other components such as the E-Motor controller 44 or the E-Motor cooling system 46 may be disposed above the downward oriented exhaust conduit. This embodiment may also include a cooling air exhaust conduit 74 extending out from the nacelle 24.

The term "system controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure system (or a system component) to accomplish the same algorithmically and/or coordination of system components. The system controller 48 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information.

The system controller 48 is shown in FIGS. 2-4 and described herein as an independent component to facilitate the description. The system controller 48 may alternatively be integrated within another controller present with the gas turbine engine 28 (or aircraft) and that controller may be configured to perform the functionality detailed herein. The present disclosure is not limited to any particular controller architecture unless specifically stated herein.

As will be detailed herein, the present disclosure HEP system 26 is configured for use with a plurality of different EMDS packages with different performance characteristics. The present disclosure HEP system 26 (including EMDS packages) may be implemented with a gas turbine engine 28 in several different ways. For example, in FIG. 2 the E-Motor 36 of the present disclosure HEP system 26 is disposed to provide rotational drive to the gas turbine engine 28 (e.g., to an engine shaft 62, 64 or to a power turbine 66 directly or indirectly through a gear box - not shown). In FIG. 3, the E-Motor 36 of the present disclosure HEP system 26 is engaged with a gear box 30 that is in drive communication with the propulsion unit 32. In FIG. 4, the present disclosure HEP system 26 includes a first E-Motor 36A disposed to provide rotational drive to the gas turbine engine 28 (e.g., to an engine shaft 62, 64 or to a power turbine 66 directly or indirectly through a gear box - not shown) and a second E-Motor 36B engaged with a gear box 30 that is in drive communication with the propulsion unit 32.

An EMDS package may include a plurality of components ("EMDS package components") that are utilized with the E-Motor 36 to enable the E-Motor 36 to produce the different performance characteristics. The EMDS package components may include, but are not limited to: the E-Motor 36, the battery 38, the battery thermal management system 40, the battery electrical management system 42, the E-Motor controller 44, the E-Motor cooling system 46. In some embodiments, the system controller 48 and/or exhaust components may be considered to be an EMDS package component. A given component within the plurality of different EMDS packages may have the same configuration in all of the EMDS packages. Other components may have different configurations in different EMDS packages. For example, different EMDS packages may have different E-Motor 36 configurations (e.g., different maximum continuous power rating), or different battery 38 configurations (e.g., different power storage capacities), and the like.

The present disclosure HEP system 26 is configured such that each different EMDS package can be installed and used within the HEP system 26 interchangeably. In terms of a new aircraft, the present disclosure allows the party ordering the aircraft 20 to select a specific EMDS package that satisfies the operational requirements specified by that party. When a specific EMDS package is selected, the components associated with that EMDS package are installed in the aircraft 20. For example, the chosen EMDS package may include any one of the following EMDS package components: a particular E-Motor 36 with a predetermined maximum continuous power rating, a particular battery 38 with a predetermined power storage capacity, a battery thermal management system 40 and a battery electrical management system 42 that are configured to accommodate the operational requirements of the chosen battery 38, an E-Motor controller 44 that is configured to accommodate the operational requirements of the chosen E-Motor 36, an E-Motor cooling system 46, and/or avionics / propulsion unit controls 70 configured to accommodate the operational requirements of the chosen EMDS package. In some embodiments, an EMDS package may include software modules that can be executed by the system controller 48 (and/or other controllers) relating to the installed EMDS package. The software modules reflect the EMDS package components and may provide whatever control logic that is required for operating aspects of the HEP system 26 with the installed EMDS package.

In terms of an existing aircraft 20, the present disclosure allows a party to retrofit the aircraft 20 possessing the present disclosure system to change an existing EMDS package with another EMDS package. When the retrofit EMDS package is selected, the EMDS package components (e.g., like those E-Motor components listed above or the like) associated with the retrofit EMDS package are installed in the aircraft 20; e.g., remove and replace as required. In some instances, there may be commonality between one or more current EMDS package components and the respective components of the retrofit EMDS package, in which case fewer EMDS package components need be replaced.

The present disclosure HEP system 26 includes universal interfaces that are configured to accept the EMDS package components of the different EMDS packages. The universal interfaces (hardware and software) make the EMDS packages interchangeable with one another. In this manner, regardless of whether the EMDS package is initially installed or is a retrofit, the interfaces are configured to accept the different EMDS package components. An example of an interface that is configured to accept the components of the different EMDS packages is an E-Motor mounting structure 76 that is configured to mount E-Motors 36 with different power ratings, or an E-Motor mounting structure 76 that is configured to mount different mounting adapters configured for different E-Motors 36. Another example of an interface that is configured to accept the components of the different EMDS packages is a wiring harness that includes multiple different wiring connectors; e.g., a first wiring connector that is configured to connect with a first battery 38 configuration, a second wiring connector that is configured to connect with a second battery 38 configuration, and so on. Any wiring connector that is not used within a given EMDS package may be sealed with a flightworthy cover. Conversely, the various battery 38 configurations in the different EMDS packages may be configured with a common interface that is accepted within the HEP system 26. Another example of an interface that is configured to accept components of the different EMDS packages is a wiring harness that is configured to connect with a first battery electrical management system 42 that is associated with a first battery 38 configuration, or a second battery electrical management system 42 that is associated with a second battery 38 configuration, and so on. Conversely, the various battery electrical management systems 42 in the different EMDS packages may be configured with a common interface that is accepted within the HEP system 26. Another example of an interface that is configured to accept the EMDS package components of the different EMDS packages is a wiring harness that is configured to connect with a first battery thermal management system 40 that is associated with a first battery 38 configuration, or a second battery thermal management system 40 that is associated with a second battery 38 configuration, and so on, or vice versa. In addition, the first battery thermal management system 40 may include cooling components sized to produce an acceptable thermal environment for the first battery 38 configuration. The universal interfaces of the present disclosure EMDS system are configured to allow cooling components (e.g., heat exchangers, fluid control devices, and the like) to be installed that are associated with a second battery thermal management system 40. In a similar manner, the universal interfaces of the present disclosure EMDS system may also be configured to allow interchangeability between E-Motor cooling systems 46. For example, a universal interface may be utilized that allows a first E-Motor cooling system 46 to be replaced by a second E-Motor cooling system 46 in a situation wherein a first EMDS package (having a first E-Motor 36 and a first E-Motor cooling system 46) is replaced by a second EMDS package (having a second E-Motor 36 and a second E-Motor cooling system 46). In this example, the first E-Motor cooling system 46 cooling capacity may be appropriate for the first E-Motor 36 (and associated components) but may not be appropriate for the second e-Motor 36 (and associated components); e.g., either inadequate or excessive. The universal interfaces of the present disclosure EMDS system permit the first E-Motor cooling system 46 to be readily replaced by the second E-Motor cooling system 46 thereby ensuring the second E-Motor 36 (and associated components) is adequately cooled. Another example of an interface that is configured to accept the EMDS package components of the different EMDS packages is an aircraft 20 that is configured to accept different battery 38 configurations. For example, the aircraft 20 may be configured to accept a single battery string (as may be used in a first EMDS package), and accept more than one battery string as may be used in other EMDS packages. In some embodiments, avionics / propulsion unit controls 70 may utilize computer logic modules that are specific to one or more EMDS packages. In a new application, the computer logic module associated with the chosen EMDS package can be installed. If a different EMDS package is subsequently installed and requires a change in the avionics / propulsion unit controls 70, the appropriate computer logic module associated with the new EMDS package can be installed or activated and the unused modules or functions can be de-activated or "locked-out" by various means such as a combination of discrete inputs and digital inputs that identify the currently utilized EDMS package. If the avionics / propulsion unit controls 70 include hardware components that vary between EMDS packages, the HEP system 26 and/or aircraft 20 can be configured to allow the existing hardware to be removed and the new hardware to be installed. In short, the universal / common interfaces of the present disclosure HEP system 26 (and/or an aircraft 20 configured to use the HEP systems 26) are configured to accept the components of any particular present disclosure HEP system 26, and to allow for retrofit of different present disclosure HEP system 26.

It should be noted that EMDS package components may be located in a variety of different locations within the HEP system 26 and/or within the aircraft 20. For example, in some embodiments and as described herein an E-Motor 36 may be located in an aircraft nacelle 24 and system batteries 38 may be located in the fuselage of the aircraft 20. In this example, some or all of the E-Motor cooling system 46 may be located with the E-Motor 36 within the nacelle, and the battery thermal management system 40 may be located with the batteries 38 in the fuselage. In this example, the universal / common interfaces would be present within the nacelle and the fuselage to enable the component interchangeability.

The present disclosure EMDS packages are understood to provide significant benefits not available with presently available HEP systems 26 and/or aircraft 20 powered by presently available HEP systems 26. The one engine inoperative (OEI) operation requirements associated with a twin propeller aircraft 20 illustrate benefits provided by the present disclosure. On a twin propeller aircraft 20, the maximum altitude ("single engine ceiling") that can be maintained following failure of an engine is usually lower than the maximum altitude that can be maintained with two engines functioning. Hence, OEI requirements might obligate the operator of a conventionally powered aircraft (or one powered by a conventional HEP system 26) to select a lower altitude route that accommodates OEI requirements despite the route being a longer distance that consumes a greater amount of fuel and produces a greater amount of CO2 emissions. Propulsion systems that have more power available in OEI conditions (e.g., present disclosure HEP systems 26 with particular EMDS packages) could increase OEI cruise altitude and permit the aircraft to fly more direct, fuel efficient routes over tall mountains. Having additional power for a limited time at high altitude to enable one engine inoperative cruise (either level cruise or to cruise with a reduced descent rate) could enable more efficient route planning and less fuel burn during normal operation. Conversely, not all flight paths include substantial altitude requirements and including the additional power capability for these flight paths might be undesirable since propulsion system weight and cost often increases with power. Propulsion systems that can be configured to accommodate specific flight paths can make it possible to address specific needs and provide efficiencies wherever possible.

The present disclosure HEP system 26 and its interchangeable EMDS packages make it possible to tailor the level of power boost from the E-Motor 36 to specific applications. As a result, the requisite E-Motor 36 power boost is provided where desired and increased efficiency may be provided where less E-Motor 36 power boost is required. Importantly, the present disclosure does not require any redesign of the aircraft HEP system 26. On the contrary, it may be possible for each present disclosure EMDS package of the present disclosure for a given airframe to receive its own type certification. Historically, once a HEP system is granted its type certificate, that type certificate stays with that propulsion system for the life of the propulsion system provided the design of the propulsion system does not change. Under the present disclosure, if it is possible to achieve a type certification for each HEP system 26 EMDS package, then a plurality of HEP system 26 configurations can be selected based on the initially desired operational parameters. Subsequently, the same airframe and HEP system 26 can be retrofitted to a different configuration by removing the existing EMDS package and replacing it with a different EMDS package.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A hybrid-electric propulsion (HEP) system (26) for an aircraft (20), comprising:
a propulsion unit (32);
a propulsion unit gear box (30) engaged with the propulsion unit (32);
a gas turbine engine (28) engaged with the propulsion unit gear box (30), the gas turbine engine (28) having a compressor section (52), a combustion section, and a turbine section (56), wherein the gas turbine engine (28) is configured to provide motive force to the propulsion unit gear box (30); and
an electric motor drive system (34) disposed to provide motive force to the propulsion gear box (30) or to the gas turbine engine (28);
wherein the electric motor drive system (EMDS) is adapted to interchangeably use a plurality of EMDS packages, and each EMDS package of the plurality of EMDS packages includes an electric motor (36) and a battery (38) configured to provide electrical energy to the electric motor (36), wherein the electric motor (36) is mounted to a motor mounting structure (76) within the HEP system (26); and
wherein the electric motor drive system (34) has a set of performance parameters, and the set of performance parameters varies depending upon the particular EMDS package of the plurality of EMDS packages that is used with the electric motor drive system (34); and
wherein the electric motor drive system (34) includes a plurality of interfaces that allow each EMDS package of the plurality of EMDS packages to be interchangeably used with the electric motor drive system (34).

2. The HEP system (26) of claim 1, wherein the plurality of EMDS packages includes a first EMDS package that has a first electric motor (36) with a first power rating and a second EMDS package that has a second electric motor (36) with a second power rating, wherein the second power rating is greater than the first power rating, and wherein the first power rating and the second power rating are each a said performance parameter within the set of performance parameters.

3. The HEP system (26) of claim 2, wherein the motor mounting structure (76) is configured to mount the first electric motor (36) or the second electric motor (36).

4. The HEP system (26) of claim 3, wherein:
the motor mounting structure (76) is configured to mount the first electric motor (36) or the second electric motor (36) to provide motive force to the gas turbine engine (28); and/or
the motor mounting structure (76) is configured to mount the first electric motor (36) or the second electric motor (36) to provide motive force to the propulsion unit gear box (30).

5. The HEP system (26) of claim 2, 3 or 4, wherein the first EMDS package includes a first battery (38) having a first power storage capacity, and the second EMDS package includes a second battery (38) having a second power storage capacity, and the second power storage capacity is greater than the first power storage capacity, and wherein the first power storage capacity and the second power storage capacity are each a said performance parameter within the set of performance parameters.

6. The HEP system (26) of claim 5, wherein the first battery (38) has a first set of thermal environment requirements and the second battery (38) has a second set of thermal environment requirements, and wherein the first EMDS package includes a first battery thermal management system (40) that is configured to satisfy the first set of thermal environment requirements, and the second EMDS package includes a second battery thermal management system (40) that is configured to satisfy the second set of thermal environment requirements, and wherein the HEP system (26) is configured such that the first battery thermal management system (40) is interchangeable with the second battery thermal management system (40),
wherein, optionally, the first set of thermal environment requirements is different than the second set of thermal environment requirements, and the first battery thermal management system (40) is configured differently than the second battery thermal management system (40).

7. The HEP system (26) of claim 5 or 6, wherein the first EMDS package includes a first battery electrical management system (42) configured for use with the first battery (38) and the second EMDS package includes a second battery electrical management system (42) configured for use with the second battery (38), and the first battery electrical management system (42) is configured differently than the second battery electrical management system (42), and wherein the HEP system (26) is configured such that the first battery electrical management system (42) is interchangeable with the second battery electrical management system (42).

8. The HEP system (26) of any of claims 2 to 7, wherein the first electric motor (36) has a first set of cooling requirements and the second electric motor (36) has a second set of cooling requirements, and wherein the first EMDS package includes a first E-Motor cooling system (46) configured to satisfy the first set of cooling requirements, and the second EMDS package includes a second E-Motor cooling system (46) configured to satisfy the second set of cooling requirements; and
wherein the HEP system (26) is configured such that the first E-Motor cooling system (46) is interchangeable with the second E-Motor cooling system (46); and
wherein the first set cooling requirements is different than the second set of cooling requirements, and the first E-Motor cooling system (46) is configured differently than the second E-Motor cooling system (46).

9. The HEP system (26) of any of claims 2 to 8, wherein the first EMDS package includes a first electric motor controller (44) configured for use with the first electric motor (36) and the second EMDS package includes a second electric motor controller (44) configured for use with the second electric motor (36), and the first electric motor controller (44) is configured differently than the second electric motor controller (44), and wherein the HEP system (26) is configured such that the first electric motor controller (44) is interchangeable with the second electric motor controller (44).

10. An aircraft (20), comprising:
a fuselage (22); and
a hybrid-electric propulsion (HEP) system (26) that includes:
a propulsion unit (32);
a propulsion unit gear box (30) engaged with the propulsion unit (32);
a gas turbine engine (28) engaged with the propulsion unit gear box (30), the gas turbine engine (28) having a compressor section (52), a combustion section, and a turbine section (56), wherein the gas turbine engine (28) is configured to provide motive force to the propulsion unit gear box (30); and
an electric motor drive system (34) disposed to provide motive force to the propulsion gear box (30) or to the gas turbine engine (28);
wherein the electric motor drive system (EMDS) (34) is adapted to interchangeably use a plurality of EMDS packages, and each EMDS package of the plurality of EMDS packages includes an electric motor (36) and a battery (38) configured to provide electrical energy to the electric motor (36), wherein the electric motor (36) is mounted to a motor mounting structure (76) within the HEP system (26); and
wherein the electric motor drive system (34) has a set of performance parameters, and the set of performance parameters varies depending upon the particular EMDS package of the plurality of EMDS packages that is used with the electric motor drive system (34); and
wherein the electric motor drive system (34) includes a plurality of interfaces that allow each EMDS package of the plurality of EMDS packages to be interchangeably used with the electric motor drive system (34).

11. The aircraft (20) of claim 10, wherein the plurality of EMDS packages includes a first EMDS package that has a first electric motor (36) with a first power rating and a second EMDS package that has a second electric motor (36) with a second power rating, wherein the second power rating is greater than the first power rating, and wherein the motor mounting system (26) is configured to mount the first electric motor (36) or the second electric motor (36),
wherein, optionally, the motor mounting structure (76) is configured to mount the first electric motor (36) or the second electric motor (36) to provide motive force to the gas turbine engine (28), or the motor mounting structure (76) is configured to mount the first electric motor (36) or the second electric motor (36) to provide motive force to the propulsion unit gear box (30).

12. The aircraft (20) of claim 10 or 11, wherein:
the plurality of EMDS packages includes a first EMDS package and a second EMDS package, the first EMDS package includes a first electric motor (36) mounted to provide motive force to the gas turbine engine (28) by a first mounting structure, and the second EMDS package includes a second electric motor (36) mounted to provide motive force to the gas turbine engine (28) by the first mounting structure, and includes a third electric motor (36) mounted to provide motive force to the propulsion unit gear box (30) by a second mounting structure; and/or
the plurality of EMDS packages includes a first EMDS package and a second EMDS package, and the first EMDS package includes a first battery (38) having a first power storage capacity, and the second EMDS package includes a second battery (38) having a second power storage capacity, and the second power storage capacity is greater than the first power storage capacity, wherein, optionally, the first battery (38) has a first number of battery strings, and the second battery (38) has a second number of battery strings, wherein the second number of battery strings is greater than the first number of battery strings.

13. A method of equipping an aircraft (20) with a hybrid-electric propulsion system (26), the method including:
providing a hybrid-electric propulsion (HEP) system (26) for an aircraft (20), comprising:
a propulsion unit (32);
a propulsion unit gear box (30) engaged with the propulsion unit (32);
a gas turbine engine (28) engaged with the propulsion unit gear box (30), the gas turbine engine (28) having a compressor section (52), a combustion section, and a turbine section (56), wherein the gas turbine engine (28) is configured to provide motive force to the propulsion unit gear box (30); and
an electric motor drive system (34) disposed to provide motive force to the propulsion gear box (30) or to the gas turbine engine (28);
wherein the electric motor drive system (EMDS) (34) is adapted to interchangeably use a plurality of EMDS packages, and each EMDS package of the plurality of EMDS packages includes an electric motor (36) and a battery (38) configured to provide electrical energy to the electric motor (36), wherein the electric motor (36) is mounted to a motor mounting structure (76) within the HEP system (26), and wherein the electric motor drive system (34) includes a plurality of interfaces that allow each EMDS package of the plurality of EMDS packages to be interchangeably used with the electric motor drive system (34); and
determining a set of performance parameters for the electric motor drive system (34) based on aircraft operational requirements; and
selecting a particular EMDS package of the plurality of EMDS packages based on the set of performance parameters for the electric motor drive system (34).

14. The method of claim 13, wherein the aircraft operational requirements include a one engine inoperative requirement.

15. The method of claim 13 or 14, wherein the plurality of EMDS packages includes a first EMDS package that has a first electric motor (36) with a first power rating and a second EMDS package that has a second electric motor (36) with a second power rating, wherein the second power rating is greater than the first power rating, and wherein the first power rating and the second power rating are each a performance parameter within the set of performance parameters; and
wherein the first EMDS package includes a first battery (38) having a first power storage capacity, and the second EMDS package includes a second battery (38) having a second power storage capacity, and the second power storage capacity is greater than the first power storage capacity, and wherein the first power storage capacity and the second power storage capacity are each a performance parameter within the set of performance parameters.
